# EUROPEAN PATENT APPLICATION

(11) **EP 3 382 429 A1**
(43) Date of publication of application: **03.10.2018**
(21) Application number: 17305359.6
(22) Date of filing: 28.03.2017
(51) Int. Cl.: G02B 1/14

(54) **OPTICAL ARTICLE COMPRISING AN ABRASION- AND/OR SCRATCH-RESISTANT COATING HAVING A LOW SENSITIVITY TO CRACKS**

(71) Applicant: Essilor International, 94220 Charenton-le-Pont (FR)
(72) Inventor: MORTREUX, Anaëlle, 94220 Charenton-Le-Pont (FR); LECLAIRE, Yves, 94220 Charenton-Le-Pont (FR)
(74) Representative: Jacobacci Coralis Harle

(57) **Abstract**

The present invention relates to an optical article comprising a substrate having at least one main surface successively coated with an impact-resistant primer coating and an abrasion- and/or scratch-resistant coating, which is formed from a composition comprising at least one epoxy compound bearing at least one silicon atom having at least one hydrolyzable group directly linked to the silicon atom and at least one group comprising an epoxy function, and/or a hydrolysate thereof, at least one alkylene glycol diglycidyl ether or poly(alkylene glycol) diglycidyl ether, colloidal particles of at least one metal oxide or metalloid oxide, at least one catalyst, the composition being devoid of comprise Si(X)₄ compounds, or hydrolysates thereof, in which the X groups independently represent C1-C6 alkoxy groups.

## Description

The present invention relates to curable compositions for preparing transparent abrasion- and/or scratch-resistant coatings, articles exhibiting abrasion- and/or scratch-resistance properties coated therewith, in particular optical and ophthalmic lenses for eyeglasses, and a process to prepare such articles. These inventions are based on the use of specific ether additives for limiting the tendency of the coating to develop cracks while maintaining excellent optical and mechanical properties.

Optical articles made of a transparent organic material or organic glass, lighter than mineral glass, are nowadays broadly used. However, organic glasses as a drawback suffer from being more sensitive to scratch and abrasion as compared to traditional mineral glasses.

In the optics field, it is usual to coat articles with coatings so as to impart to the articles various mechanical and/or optical properties. Thus, classically, coatings such as impact-resistant, anti-abrasion/scratch-resistant and/or antireflection coatings are successively formed onto articles such as ophthalmic lenses.

Abrasion-resistant and/or scratch-resistant coatings used to protect the surface of organic glasses are typically hard coatings of the poly(meth)acrylic type or based on silane hydrolysates.

A known method for making impact-resistant and abrasion-resistant coatings consists in polymerizing alkoxysilanes in the presence of curing catalysts such as aluminum derivatives. As an illustration of some literature covering such a technique, the patent US 4,211,823 may be mentioned. It describes compositions comprising a hydrolysate of a silane having an epoxy moiety and at least two alkoxy moieties directly bound to the silicon atom, silica fine particles, some aluminum chelates, in a solvent medium comprising more than 1% by weight of water, said compositions being used for coating substrates in a plastic material previously coated with a primer coating.

However, these hard coats tend to crack during polymerization, particularly when they are deposited on an impact-resistant primer coating. This phenomenon becomes really problematic when a soft impact-resistant primer coating is employed, and is amplified on substrates such as polythiourethane or polyepisulfide substrates.

In order to limit the tendency to crack formation in abrasion-resistant coatings, solutions have been proposed. Using a significant amount of a high boiling temperature solvent (around 200°C) or decreasing the curing temperature from 100°C to 85°C improves the resistance to cracking, but these solutions have the drawback of reducing abrasion-resistance.

In order to increase the flexibility of the network and thus to reduce the tendency to crack formation under thermal stress, it has also been proposed in EP 0614957 to plasticize the matrix of the coating with organic silanes such as dimethyl diethoxysilane. This patent describes compositions comprising a hydrolysate of a silane having an epoxy moiety and three alkoxy moieties directly bound to the silicon atom, a hydrolysate of a silane having two unreactive groups connected to the silicon atom through a Si-C bond and two hydrolyzable moieties directly bound to the silicon atom, colloidal silica, an aluminum compound catalyst, in a solvent medium. However, this solution also tends to decrease abrasion-resistance of the coating and often increases light diffusion.

Other hard coats have been proposed but fail to provide a solution to the problem of crack formation when the hard coat is formed on a primer coating.

JP S59-115366 discloses an optical lens having a cured film made of a mixture of an epoxyalkoxysilane or partial hydrolysate thereof, a silicon compound or partial hydrolysate thereof such as tetramethoxysilane or methyltrimethoxysilane, fine inorganic particles having a particle size of 200 nanometers or less and a refractive index of 1.6 or greater, such as TiO₂ or Al₂O₃, a metal catalyst and/or a cross-linking agent such as SnCl₂, and optional monomers or polymers such as an epoxy-containing compound, an acrylic-containing compound, a styrene-containing compound, or a melamine-containing compound. The cured film provides improved properties such as surface hardness, wear resistance, chemical resistance, corrosion resistance, and weather resistance.

US 2013/274381 discloses a hard and scratch-resistant coating composition for a lens substrate comprising a silane with four hydrolyzable groups and/or a hydrolysis/condensation product thereof such as tetraethoxysilane (preferably 5% by weight to 50 % by weight relative to the composition weight), an epoxyalkoxysilane and/or a hydrolysis/condensation product thereof, a colloidal inorganic oxide, fluoride or oxyfluoride such as SiO₂, TiO₂ or MgF₂, an epoxide compound containing at least two epoxide group such as a diglycidyl or triglycidyl ether, and a catalyst system comprising a Lewis acid and a thermolatent Lewis-acid base adduct such as ammonium perchlorate and aluminum acetylacetonate.

US 6057039 relates to a hard coating composition for a lens substrate comprising an organosilicon compound with an organic polymerizable reactive group such as γ-glycidoxypropyltrimethoxysilane, nanoparticles of at least one metal oxide, a curing catalyst system containing magnesium or ammonium perchlorate and metallic acetylacetonate chelates, optionally a polyfunctional epoxy compound such as a diglycidyl, triglycidyl or tetraglycidyl ether (5-40 % relative to the weight of the composition), and optionally a silane with four hydrolyzable groups such as tetramethoxysilane.

Thus, there is a need to improve the mechanical properties of the existing abrasion-and/or scratch-resistant coatings.

It is therefore an object of the present invention to provide a transparent optical article, particularly an ophthalmic lens, comprising a substrate in mineral or organic glass and a coating providing it with significantly improved scratch resistance and abrasion resistance properties, with a low tendency to crack formation, wherein obtaining either one of these properties should not be detrimental to the others, and this even when said coating is combined with a primer coating. The scratch-resistant and abrasion-resistant coating must have the transparency required for being applicable to the optics field, low haze, as well as a good adhesion to the other layers formed on the substrate.

It has been surprisingly found that adding specific organic ether additives having epoxy groups to the coating composition provided hard coats resistant to crack formation even when deposited onto a soft primer coating. Interestingly, this improvement does not generate any counterpart, since the adhesion and resistance to abrasion and scratch of the hard coat are not altered, and light diffusion is not increased.

To address the needs of the present invention and to remedy to the mentioned drawbacks of the prior art, the applicant provides an optical article comprising a substrate having at least one main surface successively coated with an impact-resistant primer coating and an abrasion- and/or scratch-resistant coating, in which the abrasion- and/or scratch-resistant coating is formed from a composition comprising:
(a) at least one epoxy compound bearing at least one silicon atom having at least one hydrolyzable group directly linked to the silicon atom and at least one group comprising an epoxy function linked to the silicon atom through a carbon atom, and/or a hydrolysate thereof,
(b) at least one alkylene glycol diglycidyl ether or poly(alkylene glycol) diglycidyl ether,
(c) colloidal particles of at least one metal oxide or metalloid oxide,
(d) at least one catalyst,
with the proviso that said composition does not comprise Si(X')₄ compounds, or hydrolysates thereof, in which the X' groups independently represent C1-C6 alkoxy groups.

The fact that a coating having high abrasion- and scratch-resistance can be obtained without using tetraalkoxysilanes is surprising, as these compounds are well known to increase hardness of a coating and are generally essential components in hard coat formulations, such as in JP S59-115366 and US 2013/274381.

Further, the improvement relative to the reduction of crack formation is remarkably obtained at very low concentrations of alkylene glycol diglycidyl ethers or poly(alkylene glycol) diglycidyl ethers (cracks are eliminated using a dry content of less than 3 wt. % of additive), and these plasticizing additives exhibit no compatibility problem with any other component of the composition. As a comparison, much higher amounts of known plasticizing silanes such as dimethyl diethoxysilane are necessary to reduce formation of cracks at the same level.

### Detailed description of the invention

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

When an optical article comprises one or more surface coatings, the phrase "to deposit a coating or layer onto the optical article" means that a coating or layer is deposited onto the outermost coating of the optical article, i.e. the coating which is the closest to the air.

A coating that is "on" a side of a lens is defined as a coating that (a) is positioned over that side, (b) need not be in contact with that side, i.e., one or more intervening coatings may be disposed between that side and the coating in question, and (c) need not cover that side completely.

The term "coating" is understood to mean any layer, layer stack or film, which may be in contact with the substrate and/or with another coating, for example a sol-gel coating or a coating made of an organic resin. A coating may be deposited or formed through various methods, including wet processing, gaseous processing, and film transfer.

The optical article prepared according to the present invention is a transparent optical article, preferably an optical lens or lens blank, and more preferably an ophthalmic lens or lens blank. The optical article may be coated on its convex main side (front side), concave main side (back/rear side), or both sides with the hard coating according to the invention. As used herein, the rear face of the substrate is intended to mean the face which, when using the article, is the nearest from the wearer's eye. It is generally a concave face. On the contrary, the front face of the substrate is the face which, when using the article, is the most distant from the wearer's eye. It is generally a convex face. The optical article can also be a plano article.

Herein, the term "lens" means an organic or inorganic glass lens, comprising a lens substrate, which may be coated with one or more coatings of various natures.

The term "ophthalmic lens" is used to mean a lens adapted to a spectacle frame to protect the eye and/or correct the sight. Said lens can be chosen from afocal, unifocal, bifocal, trifocal and progressive lenses. Although ophthalmic optics is a preferred field of the invention, it will be understood that this invention can be applied to optical articles of other types, such as, for example, lenses for optical instruments, in photography or astronomy, optical sighting lenses, ocular visors, optics of lighting systems, etc.

In the present description, unless otherwise specified, an optical article/material is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description, unless otherwise specified.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material acts as support for a stack of one or more coatings or layers.

The substrate may be made of mineral glass or organic glass, preferably organic glass. The organic glasses can be either thermoplastic materials such as polycarbonates and thermoplastic polyurethanes or thermosetting (cross-linked) materials such as diethylene glycol bis(allylcarbonate) polymers and copolymers (in particular CR-39^{®} from PPG Industries), thermosetting polyurethanes, polythiourethanes, preferably polythiourethane resins having a refractive index of 1.60 or 1.67, polyepoxides, polyepisulfides, such as those having a refractive index of 1.74, poly(meth)acrylates and copolymers based substrates, such as substrates comprising (meth)acrylic polymers and copolymers derived from bisphenol-A, polythio(meth)acrylates, as well as copolymers thereof and blends thereof. Preferred materials for the lens substrate are polycarbonates (PC) and diethylene glycol bis(allylcarbonate) polymers, in particular substrates made of polycarbonate.

Other examples of substrates suitable to the present invention are those obtained from thermosetting polythiourethane resins, which are marketed by the Mitsui Toatsu Chemicals company as MR series, in particular MR6, MR7 and MR8 resins. These substrates as well as the monomers used for their preparation are especially described in the patents US 4,689,387, US 4,775,733, US 5,059,673, US 5,087,758 and US 5,191,055.

Prior to depositing coatings, the surface of the article is usually submitted to a physical or chemical surface activating and cleaning treatment, so as to improve the adhesion of the layer to be deposited, such as disclosed in WO 2013/013929.

The primer coating according to the invention may be deposited onto a naked substrate or onto the outermost coating layer of the substrate if the substrate is coated with at least one surface coating, such as a polarized coating, a photochromic coating or a dyed coating.

The impact-resistant primer coating which may be used in the present invention can be any coating typically used for improving impact resistance of a finished optical article. Also, this coating generally enhances adhesion of the abrasion resistant coating of the invention on the substrate of the finished optical article. By definition, an impact-resistant primer coating is a coating which improves the impact resistance of the finished optical article as compared with the same optical article but without the impact-resistant primer coating.

Typical impact-resistant primer coatings are (meth)acrylic based coatings and polyurethane based coatings. In particular, the impact-resistant primer coating according to the invention can be made from a latex composition such as a poly(meth)acrylic latex, a polyurethane latex or a polyester latex.

Preferred primer compositions include compositions based on thermoplastic polyurethanes, such as those described in the patents JP 63-141001 and JP 63-87223, poly(meth)acrylic primer compositions, such as those described in the patents US 5,015,523 and US 6,503,631, compositions based on thermosetting polyurethanes, such as those described in the patent EP 0404111 and compositions based on poly(meth)acrylic latexes or polyurethane latexes, such as those described in the patents US 5,316,791 and EP 0680492. Other primer coatings are disclosed for example in WO 00/50928 and EP 1651986.

Preferred primer compositions are compositions based on polyurethanes and compositions based on latexes, in particular polyurethane latexes, poly(meth)acrylic latexes and polyester latexes, as well as their combinations. In one embodiment, the impact-resistant primer comprises colloidal fillers.

Poly(meth)acrylic latexes are latexes based on copolymers essentially made of a (meth)acrylate, such as for example ethyl (meth)acrylate, butyl (meth)acrylate, methoxyethyl (meth)acrylate or ethoxyethyl (meth)acrylate, with at least one other co-monomer in a typically lower amount, such as for example styrene.

Commercially available primer compositions suitable for use in the invention include the Witcobond^{®} 232, Witcobond^{®} 234, Witcobond^{®} 240, Witcobond^{®} 242 compositions (marketed by BAXENDEN CHEMICALS), Neorez^{®} R-962, Neorez^{®} R-972, Neorez^{®} R-986 and Neorez^{®} R-9603 (marketed by ZENECA RESINS), and Neocryl^{®} A-639 (marketed by DSM coating resins).

The thickness of the impact-resistant primer coating, after curing, typically ranges from 0.05 to 30 µm, preferably 0.2 to 20 µm and more particularly from 0.5 to 10 µm, and even better 0.6 to 5 µm or 0.6 to 3 µm, and most preferably 0.8 to 1.5 microns.

The impact-resistant primer coating is preferably in direct contact with the abrasion-and/or scratch-resistant coating.

The abrasion- and/or scratch-resistant coating is formed from a (curable) coating composition comprising at least one epoxy compound bearing at least one silicon atom having at least one hydrolyzable group directly linked to the silicon atom and at least one group comprising an epoxy function linked to the silicon atom through a carbon atom, and/or a hydrolysate thereof (compound (a)), at least one alkylene glycol diglycidyl ether or poly(alkylene glycol) diglycidyl ether (compound (b)), colloidal particles of at least one metal oxide or metalloid oxide (compound (c)), and at least one catalyst (compound (d)).. It will be sometimes referred to in this patent application as the "hard coat composition".

Said coating is an epoxy coating, resulting from the polymerization of at least compounds (a) and (b), which all comprise at least one epoxy group. In the present invention, a coating containing hybrid epoxy copolymers will be generated by using epoxy compounds (b), devoid of silicon atom, together with organosilanes (a).

The epoxy compounds according to the invention are cyclic ethers and are preferably epoxides (oxiranes). As used herein, the term epoxide represents a subclass of epoxy compounds containing a saturated three-membered cyclic ether. The epoxy groups of compounds (a) are preferably chosen from glycidyl groups and cycloaliphatic epoxy groups, more preferably from alkyl glycidyl ether groups and cycloaliphatic epoxy groups.

The abrasion- and/or scratch-resistant coating is used in the present invention for improving abrasion- and/or scratch-resistance of the finished optical article as compared to a same optical article without the abrasion- and/or scratch-resistant coating. It results from the curing of a curable composition according to the invention, generally heat-curing.

Compound (a) is used as a binder. The binder is defined as a film-forming material, which is capable of improving adhesion of the coating to the underlying layer and/or the upper layer, and/or integrity of the coating. Compound (a) preferably has from 2 to 6, more preferably 2 or 3 functional groups generating a silanol group under hydrolysis. Said compound is considered as being an organic compound, and preferably has formula (I):

R_{n'}YₘSi(X)_{4-n'-m} (I)

in which the R groups are identical or different and represent monovalent organic groups linked to the silicon atom through a carbon atom, the Y groups are identical or different and represent monovalent organic groups linked to the silicon atom through a carbon atom and containing at least one epoxy function, the X groups are identical or different and represent hydrolyzable groups, m and n' are integers such that m is equal to 1 or 2 and n' + m = 1 or 2.

The X groups lead to an OH group upon hydrolysis. It is worth noting that SiOH bonds may be present in the compounds of formula I, which are considered in this case as hydrolysates. Hydrolysates also encompass siloxane salts.

The term "hydrolysate" of a silane derivative expresses the fact that it is also possible in the context of the present invention that the silane derivative has already been at least partly hydrolyzed to form silanol groups, and a certain degree of crosslinking may also have already taken place through condensation reaction of these silanol groups.

The X groups may independently and without limitation represent H, alkoxy groups -OR¹, wherein R¹ preferably represents a linear or branched alkyl or alkoxyalkyl group, preferably a C₁-C₄ alkyl group, acyloxy groups -O-C(O)R³, wherein R³ preferably represents an alkyl group, preferably a C₁-C₆ alkyl group, and more preferably a methyl or ethyl group, halogen groups such as Cl and Br, amino groups optionally substituted with one or two functional groups such as an alkyl or silane group, for example the NHSiMe₃ group, alkylenoxy groups such as the isopropenoxy group, trialkylsiloxy groups, for example the trimethylsiloxy group.

The X groups are preferably alkoxy groups, in particular methoxy, ethoxy, propoxy or butoxy, more preferably methoxy or ethoxy. In this case, compounds of formula I are alkoxysilanes.

The integers n' and m define three groups of compounds I: compounds of formula RYSi(X)₂, compounds of formula Y₂Si(X)₂, and compounds of formula YSi(X)₃. Among these compounds, epoxysilanes having the formula YSi(X)₃ are preferred.

The monovalent R groups linked to the silicon atom through a Si-C bond are organic groups. These groups may be, without limitation, hydrocarbon groups, either saturated or unsaturated, preferably C₁-C₁₀ groups and better C₁-C₄ groups, for example an alkyl group, preferably a C₁-C₄ alkyl group such as methyl or ethyl, an aminoalkyl group, an alkenyl group, such as a vinyl group, a C₆-C₁₀ aryl group, for example an optionally substituted phenyl group, in particular a phenyl group substituted with one or more C₁-C₄ alkyl groups, a benzyl group, a (meth)acryloxyalkyl group, or a fluorinated or perfluorinated group corresponding to the above cited hydrocarbon groups, for example a fluoroalkyl or perfluoroalkyl group, or a (poly)fluoro or perfluoro alkoxy[(poly)alkyloxy]alkyl group.

The most preferred R groups are alkyl groups, in particular C₁-C₄ alkyl groups, and ideally methyl groups.

The monovalent Y groups linked to the silicon atom through a Si-C bond are organic groups since they contain at least one epoxy function, preferably one epoxy function. By epoxy function, it is meant a group of atoms, in which an oxygen atom is directly linked to two adjacent carbon atoms or non adjacent carbon atoms comprised in a carbon containing chain or a cyclic carbon containing system. Among epoxy functions, oxirane functions are preferred, i.e. saturated three-membered cyclic ether groups.

Most preferred epoxysilanes are those wherein, in formula I, n'=0, m=1 and X is a C1-C5 alkoxy group, preferably OCH₃.

Epoxysilanes compounds of formula (I) provide a highly cross-linked matrix. The preferred epoxysilanes have an organic link between the Si atom and the epoxy function that provides a certain level of flexibility.

The preferred Y groups are groups of formulae IV and V: 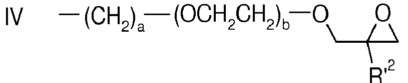 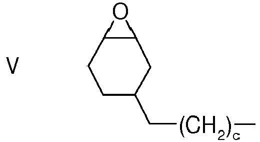 in which R^{'2} is an alkyl group, preferably a methyl group, or a hydrogen atom, ideally a hydrogen atom, a and c are integers independently ranging from 1 to 6, and b is 0, 1 or 2.

The preferred group having formula IV is the γ-glycidoxypropyl group (R^{'2} = H, a = 3, b = 0) and the preferred (3,4-epoxycyclohexyl)alkyl group of formula V is the β-(3,4-epoxycyclohexyl)ethyl group (c = 1). The β-glycidoxyethoxypropyl group may also be employed (R^{'2} = H, a = 3, b = 1).

Preferred epoxysilanes of formula (I) are epoxyalkoxysilanes, and most preferred are those having one Y group and three alkoxy X groups. Particularly preferred epoxytrialkoxysilanes are those of formulae VI and VII: 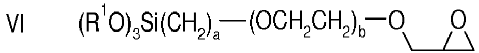 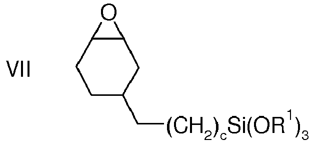 in which R¹ is an alkyl group having 1 to 6 carbon atoms, preferably a methyl or ethyl group, and a, b and c are such as defined above.

Examples of such epoxysilanes include but are not limited to glycidoxy methyl trimethoxysilane, glycidoxy methyl triethoxysilane, glycidoxy methyl tripropoxysilane, α-glycidoxy ethyl trimethoxysilane, α-glycidoxy ethyl triethoxysilane, β-glycidoxy ethyl trimethoxysilane, β-glycidoxy ethyl triethoxysilane, β-glycidoxy ethyl tripropoxysilane, α-glycidoxy propyl trimethoxysilane, α-glycidoxy propyl triethoxysilane, α-glycidoxy propyl tripropoxysilane, β-glycidoxy propyl trimethoxysilane, β-glycidoxy propyl triethoxysilane, β-glycidoxy propyl tripropoxysilane, γ-glycidoxy propyl trimethoxysilane, γ-glycidoxy propyl triethoxysilane, γ-glycidoxy propyl tripropoxysilane, 2-(3,4-epoxycyclohexyl) ethyltrimethoxysilane, 2-(3,4-epoxycyclohexyl) ethyltriethoxysilane. Other useful epoxytrialkoxysilanes are described in patents US 4,294,950, US 4,211,823, US 5,015,523, EP 0614957, US 2009/0311518, US 2011/0058142 (compounds of formulae I, VII and VIII) and WO 94/10230. Among those silanes, γ-glycidoxypropyltrimethoxysilane (glymo) is preferred.

Preferred epoxysilanes of formula (I) having one Y group and two X groups include, but are not limited to, epoxydialkoxysilanes such as γ-glycidoxypropyl-methyl-dimethoxysilane, γ-glycidoxypropyl bis(trimethylsiloxy) methylsilane, γ-glycidoxypropyl-methyl-diethoxysilane, γ-glycidoxypropyl-methyl-diisopropenoxysilane, and γ-glycidoxyethoxypropyl-methyl-dimethoxysilane. When epoxy dialkoxysilanes are used, they are preferably combined with epoxytrialkoxysilanes such as those described above, and are preferably employed in lower amounts than said epoxytrialkoxysilanes.

The choice of compound (a) is generally determined by the employed system of solvents in the coating composition, for it has to be soluble or dispersible in said system of solvents, typically water, alcohols, or an aqueous composition such as a hydro-alcoholic composition. Compounds (a) from different categories may be employed.

According to one aspect of this invention, hydrolysis-polymerizable compound (a) is generally hydrolyzed before being mixed to the other components of the composition. The hydrolysis may be performed as known in the art of sol-gel processing, such as disclosed in FR 2702486 and US 4,211,823. Acidic catalysts such as hydrochloric acid or acetic acid may be used to promote the hydrolysis reaction, in the presence of water.

The above described organofunctional binders form silica organosols. After having been subjected to hydrolysis, they generate interpenetrated networks by forming silanol groups, which are capable of establishing bonds with the underlying layer and may act as adhesion promoters. They may also act as cross-linking agents toward other compounds present in the composition such as compounds (b).

Despite the epoxysilane is generally under hydrolyzed form, the amount of epoxysilane will be conventionally defined as the weight of the initial precursor before its hydrolysis. Hydrolysis of alkoxy groups liberates the associated alcohol to form silanol groups which will condense spontaneously. Preferably, the alkoxysilane is reacted with a stoichiometric amount of water to hydrolyze the hydrolyzable groups, typically the alkoxy groups.

The composition preferably comprises from 10 to 60 % by weight of compounds (a), more preferably from 15 to 50 %, even more preferably from 20 to 40 % or 25 to 30 %, relative to the total weight of the composition. Compounds (a) are generally present in an amount ranging from 40 to 80 %, preferably from 45 to 75 %, more preferably from 50 to 70 %, even more preferably from 50 to 60 %, relative to the dry extract weight of the composition.

The dry extract weight content of a compound of the composition represents the content of this compound in the final coating. The dry extract weight can be calculated as a theoretical dry extract weight as disclosed in US 2012/0295084 or EP 614957. Typically, it is, for a hydrolyzable silane compound, the calculated weight as expressed in QₖSiO_{(4-k)/2} units wherein Q is an organic moiety directly bound to the silicon atom through a Si-C bond, k is 0, 1, 2 or 3, and QₖSiO_{(4-k)/2} results from the hydrolysis of QₖSiR'"₍₄₋ₖ₎ where Si-R'" gives Si-OH upon hydrolysis.

The dry extract weight can also be determined experimentally. The dry extract of a compound or composition is the total weight of the compound or composition after the full removal of volatile solvent(s) at 100°C to 110°C in an oven. The dry extract is also called solids content, percent non volatile material by weight or % NVM. Traditional procedures to determine solids take 60 min at 105°C to 110°C in an oven, and require both pre-and post weighing of the sample pan and sample (ASTM designations: D2369 and D2926-80). The new procedures using the commercial Mark 3 solids analyzer purchased from Sartorius, or SMART Turbo™ purchased from CEM, take only 2 to 10 minutes, depending on the volatile/moisture content and viscosity of the material.

The present composition does not comprise Si(X')₄ compounds, or hydrolysates thereof, in which the X' groups independently represent C1-C6 alkoxy groups (e.g., tetraethoxysilane). Preferably, said composition does not comprise Si(X")₄ compounds, or hydrolysates thereof, in which the X" groups independently represent hydrolyzable groups. In the latter embodiment, the X" groups may be chosen from the same groups as the X groups described above.

In another embodiment, the composition does not comprise M(Z)_{y} compounds, or hydrolysates thereof, wherein M represents a metal or a metalloid, the Z groups, being the same or different, are hydrolyzable groups and y is the metal or metalloid M valence.

In an alternative embodiment, the composition comprises less than 2 % by weight of Si(X')₄ compounds, or hydrolysates thereof, relative to the total weight of the composition.

In some aspects of the invention, the composition does not comprise RₙSi(X")₄₋ₙ compounds, or hydrolysates thereof, in which the R groups are identical or different and represent monovalent alkyl groups, the X" groups are identical or different and such as defined above, and n is an integer equal to 1, 2 or 3, preferably 1. An example of such compound is methyl triethoxysilane.

The hard coating composition according to the invention comprises at least one alkylene glycol diglycidyl ether or poly(alkylene glycol) diglycidyl ether as a compound (b), in other words at least one (α,ω)-alkylenediol diglycidyl ether or (α,ω)-poly(alkylenediol) diglycidyl ether.

Compound (b) according to the invention is a bi-functional epoxy monomer having two epoxide groups per molecule.

In a preferred embodiment, compound (b) has the following formula (II): 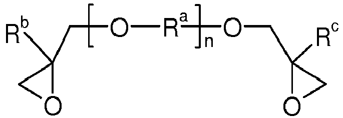 in which R^{a} is an alkylene group, R^{b} and R^{c} independently represent H or an alkyl group, n is an integer ranging from 1 to 100, preferably from 1 to 50. n is preferably lower than or equal to any one of the following values: 25, 20, 15, 10, 8, 9, 6, 4. R^{a} is a divalent group, which may be cyclic or acyclic, linear or branched, having 2-20 carbon atoms, preferably 2-10 carbon atoms, more preferably 2-8 carbon atoms, even more preferably 2-6 carbon atoms, ideally 2-4 carbon atoms, such as ethylene, n-propylene, i-propylene, n-butylene, n-pentylene or n-hexylene. R^{a} is preferably a linear and acyclic alkylene group and n is preferably 1, 2 or 3, more preferably 1 or 2. R^{b} and R^{c} are identical or different and preferably represent H or a C1-C6 alkyl group, preferably H or methyl, ideally H.

In one embodiment, compound (b) has the following formula (III): 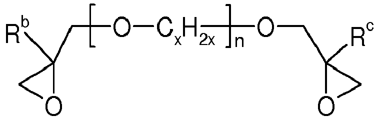 in which R^{b}, R^{c} and n are such as defined above and x is an integer ranging from 2 to 20, preferably from 2 to 10, more preferably from 2 to 8, even more preferably from 2 to 6, ideally from 2 to 4.

Preferred compounds (b) are alkylene glycol diglycidyl ethers having an alkylene group comprising from 2 to 10 carbon atoms.

Non-limiting examples of compounds (b) include ethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, diethylene glycol diglycidyl ether, triethylene glycol diglycidyl ether, tetraethylene glycol diglycidyl ether, nonaethylene glycol diglycidyl ether, 1,4-butanediol diglycidyl ether, 1,3-butanediol diglycidyl ether, 2,3-butanediol diglycidyl ether, 1,5-pentanediol diglycidyl ether, 2,4-pentanediol diglycidyl ether, 1,6-hexanediol diglycidyl ether, 2,5-hexanediol diglycidyl ether, 2-methyl-2,4-pentanediol diglycidyl ether, neopentyl glycol diglycidyl ether, cyclohexanedimethanol diglycidyl ether, 2,2-bis(4-hydroxycyclohexyl)propane diglycidyl ether, polypropylene glycol diglycidyl ether, polyethylene glycol diglycidyl ether.

The composition generally comprises an amount lower than or equal to 5 % by weight of compounds (b), preferably from 0.3 to 5 % by weight, more preferably from 0.5 to 4 %, even more preferably from 0.75 to 3 % or 0.9 to 2 %, ideally from 0.9 to 1.5 %, relative to the total weight of the composition. Compounds (b) are generally present in an amount lower than or equal to 15 %, typically ranging from 0.75 to 15 %, preferably from 1 to 10 %, more preferably from 2 to 7.5 %, even more preferably from 2.3 to 6.5 %, ideally from 2.3 to 5.5 %, relative to the dry extract weight of the composition.

Although compound (b) is used at relatively low concentrations, it is responsible for the improvement of the behavior of the resulting hard coat when deposited onto an impact-resistant primer coating, i.e. develops less or no cracks. Hard coats prepared from compositions according to the invention comprising at least one compound (b) exhibit adhesion, transparence, abrasion- and scratch-resistance properties, which are generally similar to or higher than those obtained from the corresponding compositions without any compound of formula (b).

Without wishing to be bound by any theory, the inventors believe that compounds (b) generate an organic-inorganic network structure having a higher flexibility and stability. It is believed that compounds (b) form a resin that positions between the macromolecular chains during polymerization, through condensation with the epoxide functions. The densification of the matrix will be less important than with a siloxane compound, thus generating a softened, plasticized network, which is less prone to develop cracks.

The composition preferably comprises at least 50 %, preferably at least 60 %, more preferably at least 75, 80, 85, 90, 95 or 100 % by weight of compounds having at least one epoxy group, relative to the total weight of polymerizable compounds present in the composition. The dry extract weight of acrylic and/or methacrylic monomers preferably represents less than 30 % of the dry extract weight of the composition, more preferably less than 25 %, 20 %, 10 %, 5 %. This amount can also be 0 %. These amounts also preferably apply to non-epoxy containing monomers.

The composition further includes at least one metal oxide or metalloid oxide to increase the hardness of the coating, and optionally adapt the refractive index of the resulting coating. It is used under a colloidal form (compound (c)).

Colloidal particle preparation requires well known methods. As used herein, "colloids" are fine particles the mean diameter of which (or the largest size of which in case of elongated particles) is less than 150 nm, more preferably less than 100 nm, dispersed within a dispersing medium such as water, an alcohol, a ketone, an ester or combinations thereof, preferably an alcohol such as methanol, ethanol or isopropanol. With such low mean particle diameter, the transparency of the coating is not affected. Preferred colloidal particle diameters range from 2 to 100 nm, from 2 to 50 nm and from 5 to 40 nm. The size of the particles in the liquid is determined by conventional methods such as light scattering, and particles size analyzer. The size of the particles in the solid is determined by tunneling electron microscope or light scattering.

In some embodiments, colloidal particles may be made of a mixture of small sized-particles, for example having a diameter of from 10 to 15 nm and of larger sized- particles, for example having a diameter of from 30 to 80 nm.

Non-limiting examples of such oxide colloidal particles include particles of silicon oxide (preferably SiO₂), aluminum oxide, zirconium oxide, alumina-doped silicon oxide, indium-doped tin oxide (ITO), antimony-doped tin oxide (ATO), aluminum-doped zinc oxide, tin oxide (SnO₂), zinc oxide (ZnO), indium oxide (In₂O₃), TiO₂, Sb₂O₃, Sb₂O₅, Y₂O₃, Ta₂O₅, La₂O₃, Fe₂O₃, WO₃, vanadium pentoxide, cerium oxide, zinc antimonate, indium antimonate or a mixture of two or more thereof, colloidally dispersed in a dispersion medium. The last two compounds and the method for preparing the same are described in the patent US 6,211,274.

These particles may be modified by grafting an organic group, especially onto a silicon atom, or may be composite particles based on two or more mineral oxides (e.g., having a core/shell structure). Composites such as SiO₂/TiO₂, SiO₂/ZrO₂, SiO₂/TiO₂/ZrO₂, or TiO₂/SiO₂/ZrO₂/SnO₂ may be employed.

The colloidal particles may also be porous or hollow. The preparation and use of such particles have been extensively described in the literature, in particular in the patent applications WO 2006/095469, JP 2001-233611, WO 00/37359 and JP2003-222703. Such particles are also commercially available from the Catalysts & Chemicals Industries Co. (CCIC), for example in the form of porous silica sols under the trade name THRULYA^{®}.

The most preferred colloidal particles of at least one metal oxide or metalloid oxide are silica, Al₂O₃ and TiO₂ colloids, preferably silica. These particles may be prepared by the Stöber method. The Stöber method is a simple and well known method comprising a hydrolysis and condensation of the ethyl tetrasilicate Si(OC₂H₅)₄ in ethanol catalyzed by ammonia. The method allows to obtain a silica directly in ethanol, a quasi monodispersed particle population, a controllable particle size and a particle surface (SiO⁻NH4⁺). Silica colloids are also marketed by DuPont de Nemours under the commercial name Ludox^{®}.

The composition preferably comprises from 1 to 40 % by weight of compounds (c), more preferably from 2 to 30 %, even more preferably from 5 to 20 % or 7 to 15 %, relative to the total weight of the composition. Compounds (c) are generally present in an amount ranging from 20 to 50 %, preferably from 25 to 45 %, more preferably from 27 to 40 %, even more preferably from 28 to 35 %, relative to the dry extract weight of the composition.

The compositions of the present invention advantageously further contain small amounts, preferably from 0.005 to 1 % by weight, based on the total weight of the composition, of at least one non ionic or ionic surface active compound (surfactant), more preferably from 0.02 to 0.8 %, still more preferably from 0.1 to 0.7 %. The surfactant is important for good wetting of the substrate resulting in satisfactory cosmetics of the final coating. Said surfactant can include for example poly(alkylene glycol)-modified polydimethylsiloxanes or polyheptamethylsiloxanes, or fluorocarbon-modified polysiloxanes. Preferred surfactants are fluorinated surfactant such as Novec^{®} FC-4434 from 3M (non ionic surfactant comprising fluoroaliphatic polymeric esters), Unidyne™ NS-9013, and EFKA^{®} 3034 from CIBA (fluorocarbon-modified polysiloxane). Useful fluorinated surfactants are disclosed in WO 2010/076314.

The epoxy compounds of the composition are submitted to a polycondensation and/or cross-linking reaction accelerated in the presence of an epoxy ring-opening catalyst (compound (d)). Preferred catalysts found to be able to cure the epoxy composition at temperatures low enough (preferably ≤ 110°C, more preferably ≤ 100°C) not to damage the underlying substrate or cause adverse affects to other coatings or coating components include (strong) acid catalysts (such as the Lewis acids disclosed in US 2013/274381), ammonium salts of metal anions and aluminum-based compounds, designed for ring opening polymerization of cyclic ether groups.

In a preferred embodiment, catalyst (d) is chosen from aluminum chelates, aluminum acrylates, aluminum alkoxides, and siloxy aluminum compounds. The composition does preferably not contain other epoxy ring-opening catalysts such as acid catalysts or ammonium salts of metal anions when those aluminum compounds are employed.

Aluminum acrylates, siloxy aluminum compounds and aluminum alkoxides are of preferred general formulae Al(OC(O)R)ₙ(OR')₃₋ₙ, Al(OC(O)R)ₙ(OSiR"₃)₃₋ₙ and Al(OSiR"₃)ₙ(OR')₃₋ₙ, wherein R and R' are linear or branched chain alkyl groups containing from 1 to 10 carbon atoms, R" is a linear or branched chain, alkyl group containing from 1 to 10 carbon atoms, a phenyl moiety, an acylate moiety of formula OC(O)R, wherein R is as defined just hereabove, and n is an integer from 1 to 3. Preferably, R' is an isopropyl or ethyl group, R and R" are methyl groups.

Aluminum chelates may be formed by reacting an aluminum alkoxide or acylate with chelating agents free from nitrogen or sulfur, comprising oxygen as a coordinating atom, for example acetylacetone, ethyl acetoacetate or diethyl malonate. They may be chosen from aluminum acetylacetonate noted Al(AcAc)₃, ethyl mono(acetoacetate) aluminum bisacetylacetonate, ethyl bis(acetoacetate) aluminum monoacetyl acetonate, di-n-butoxy aluminum ethyl mono(acetoacetate) and di-i-propoxy aluminum ethyl mono(acetoacetate). Other examples of useful catalysts are given in the patent EP 0614957. When the epoxy ring-opening catalyst is an aluminum chelate, the coating composition preferably comprises an organic solvent which boiling temperature at the atmospheric pressure does range from 70 to 140°C, for example ethanol, isopropanol, ethyl acetate, methylethylketone or tetrahydropyrane.

Other metal complex catalysts can also be used, such as iron acetylacetonate or zinc acetylacetonate.

The catalyst is generally used in amounts ranging from 0.01-5 % by weight based on the weight of the composition, preferably from 0.1 to 3.5 % by weight, more preferably from 0.2 to 3 % by weight.

The composition according to the invention generally contains 15-50 % by weight of solids (dry extract weight relative to the weight of the composition), preferably from 20 to 45 %, more preferably from 25 to 40 %.

The composition generally contains at least one solvent, which is preferably an alcohol, such as an alkanol (methanol, ethanol, propanol...) or a glycol monoether (e.g., Dowanol PM^{®} from Dow Chemical), a ketone (such as methyl ethyl ketone), propylene carbonate or water. The solvent is preferably an organic solvent such as methanol.

The total amount of solvent depends on the resins used, on the type of optical article and on the coating process. The purpose of the solvent is to achieve good surface wetting and a specific coating viscosity range determined by the coating equipment used to achieve a specific coating thickness range. The solvent or mixture of solvents typically represents from 25 to 75 % of the weight of the composition, preferably from 30 to 65 %, more preferably from 40 to 60%.

According to the invention, the coating composition can comprise at least one absorbing dye (pigment or colorant) that at least partially inhibits transmission of light in a selected wavelength range within the visible light range (380-780 nm), and optionally at least one color balancing agent and/or optical brightener in order to at least partially offset the color imparted by the dye. In an embodiment, the selected spectral range within the 380-780 nm region of the electromagnetic spectrum is 400 nm to 500 nm, i.e., the blue wavelength range, more preferably the 415-455 nm range or the 420-450 nm range.

More details concerning this embodiment, such as the arrangement of the color-balancing component relative to the system blocking blue light wavelengths, and exemplary systems including a blue blocking component and a color-balancing component can be found e.g. in US 8,360,574, WO 2007/146933, WO 2015/097186 and WO 2015/097492.

The amount of dye used in the present invention is an amount sufficient to provide a satisfactory inhibition of light within the 380-780 nm wavelength range. For example the dye can be used at a level of 0.005 to 0.50 % or 0.01 to 0.2 % based on the weight of the coating composition, depending on the strength of the dye and the amount of inhibition/protection desired. It should be understood that the invention is not limited to these ranges, which are only given by way of example.

The composition can further include various additives conventionally used in polymerizable compositions, in conventional proportions. These additives include curing/cross-linking agents (e.g. silane coupling agents or co-monomers such as polyamines, polythiols, polyols, polycarboxylic acids), photochromic agents, lubricants, rheology modifiers, flow and leveling additives, wetting agents, antifoaming agents, stabilizers, pH regulators, UV absorbers and free radical scavengers (such as hindered amine light stabilizers and antioxidants).

Its advantages are numerous and include applicability to most of substrates with good adhesion, in particular plastic substrates, and the production of optical articles having high transmittance, low haze, high abrasion- and scratch-resistance while maintaining excellent adhesion of the coatings.

The invention further relates to the use of at least one alkylene glycol diglycidyl ether or poly(alkylene glycol) diglycidyl ether in an abrasion- and/or scratch-resistant coating composition, for limiting or eliminating the occurrence of cracks in the coating obtained from curing said composition, when deposited onto an impact-resistant primer coating.

The invention also relates to a process of manufacturing an optical article such as herein described, comprising:
(i) providing an optical article comprising a substrate having at least one main surface,
(ii) depositing on said surface an impact-resistant primer coating,
(iii) depositing on said primer coating a composition such as described previously,
(iv) curing the optical article resulting from step (iii) so as to obtain a cured abrasion-and/or scratch-resistant coating.

The coatings or coating compositions may be deposited onto the surface of the optical article by liquid phase deposition or lamination according to any appropriate method, starting from the above described liquid coating composition and then be dried, pre-cured or cured at a temperature of generally about 70-100°C, when necessary. Application of said composition may be carried out, without limitation, by spin coating, dip coating, spray coating, brush coating, roller coating or flow coating. Spin coating and dip coating are preferred. The drying/curing step is preferably performed using heat or ultraviolet radiation and comprises evaporation of the solvents, solidification and cross-linking of the reactive epoxy compounds.

The thickness of the cured abrasion- and/or scratch-resistant coating may be adapted to the specific application required and generally ranges from 0.5 to 50 µm, preferably from 1 to 20 µm or 1 to 10 µm, more preferably from 1.5 to 10 µm, even more preferably from 2 to 5 µm. The coating thickness can be easily adjusted by modifying the solvent concentration of the claimed compositions and the coating conditions, for example the withdrawal speed in case of deposition by dip coating. The longer the withdrawal time, the thinner will be the final dry coating.

The substrate's main surface can be coated with several functional coating(s) to improve its optical and/or mechanical properties. The functional coatings used herein can be selected from, without limitation to these coatings, an antireflection coating, a polarized coating, a photochromic coating, an antistatic coating, an anti-fouling coating (hydrophobic and/or oleophobic coating), an antifog coating, a precursor of an antifog coating or a stack made of two or more such coatings. In one embodiment, the present optical article is prepared by forming on the substrate the primer coating in a first manufacturing site, while the other coatings are formed in a second manufacturing site.

The antireflection coating may be any antireflection coating traditionally used in the optics field, particularly ophthalmic optics. As is also well known, antireflection coatings traditionally comprise a monolayered or a multilayered stack composed of dielectric materials (generally one or more metal oxides) and/or sol-gel materials and/or organic/inorganic layers such as disclosed in WO 2013/098531. These are preferably multilayered coatings, comprising layers with a high refractive index (HI) and layers with a low refractive index (LI).

The structure and preparation of antireflection coatings are described in more details in patent application WO 2010/109154, WO 2011/080472 and WO 2012/153072.

The antifouling top coat is preferably deposited onto the outer layer of the antireflective coating. As a rule, its thickness is lower than or equal to 10 nm, does preferably range from 1 to 10 nm, more preferably from 1 to 5 nm. Antifouling top coats are generally coatings of the fluorosilane or fluorosilazane type, preferably comprising fluoropolyether moieties and more preferably perfluoropolyether moieties. More detailed information on these coatings is disclosed in WO 2012076714.

The optical material according to the invention preferably has a relative light transmission factor in the visible spectrum Tv higher than or equal to 80 %, preferably higher than or equal to 85 %, more preferably higher than or equal to 90 %, and better higher than or equal to 92 %.

The present optical articles made from optical material according to the invention can be coated with antireflective coatings on one or both air/substrate interface(s). In such embodiments, the Tv factor preferably ranges from 87 % to 99 %, more preferably from 90 % to 98 %, even better from 92 % to 97 %.

The Tv factor, also called "luminous transmission" of the system, is such as defined in the standard NF EN 1836 and relates to an average in the 380-780 nm wavelength range that is weighted according to the sensitivity of the eye at each wavelength of the range and measured under D65 illumination conditions (daylight).

The optical article according to the invention has satisfactory color properties, which can be quantified by the yellowness index Yi. The degree of whiteness of the inventive optical material may be quantified by means of colorimetric measurements, based on the CIE tristimulus values X, Y, Z such as described in the standard ASTM E313 with illuminant C observer 2°. The optical material according to the invention preferably has a low yellowness index Yi, i.e., lower than 10, more preferably lower than 5, as measured according to the above standard. The yellowness index Yi is calculated per ASTM method E313 through the relation Yi = (127.69 X - 105.92 Z)) / Y, where X, Y, and Z are the CIE tristimulus values.

The following examples illustrate the present invention in a more detailed, but non-limiting manner. Unless stated otherwise, all thicknesses disclosed in the present application relate to physical thicknesses. The percentages given in the tables are weight percentages. Unless otherwise specified, the refractive indexes referred to in the present invention are expressed at 25 °C at a wavelength of 550 nm.

### EXAMPLES

### 1. Testing methods

The following test procedures were used to evaluate the optical articles prepared according to the present invention. Three samples for each system were prepared for measurements and the reported data were calculated in the average of three data.

### a) % of cracks initiated

The percentage of cracks initiated was measured using ASTM D3359-93, by cutting through the hard coating, after prepolymerization 15 minutes at 75°C, 4 series of 5 lines, the lines being spaced 1 mm apart with a razor, each series being at an opposite position on the lens. Each line had two initiation points, corresponding to its two end points. Therefore, there were 40 initiation points on the lens that were intentionally created, in order to increase the tendency of the coating to crack during polymerization and to more easily detect sensitive coatings. The hard coating was then polymerized during 3 hours at 100°C.

The initiation points, which have initiated cracks, were then counted. The number of initiation points having initiated at least one crack over the total number of initiation points corresponds to a ratio, leading a percentage of initiated cracks.

### b) Dry Adhesion test (crosshatch test)

Dry adhesion of the transferred coatings was measured using the cross-hatch adhesion test according to ASTM D3359-93, by cutting through the coatings a series of 5 lines, spaced 1 mm apart with a razor, followed by a second series of 5 lines, spaced 1 mm apart, at right angles to the first series, forming a crosshatch pattern comprising 25 squares. After blowing off the crosshatch pattern with an air stream to remove any dust formed during scribing, clear cellophane tape (3M SCOTCH^{®} n° 600) was then applied over the crosshatch pattern, pressed down firmly, and then rapidly pulled away from coating in a direction perpendicular to the coating surface. Application and removal of fresh tape was then repeated two additional times. Adhesion is rated as follows (0 is the best adhesion, 1-4 is in the middle, and 5 is the poorest adhesion):

**Table 1**

| Adhesion score | Squares removed | Area % left intact |
|---|---|---|
| 0 | 0 | 100 |
| 1 | < 1 | > 96 |
| 2 | 1 to 4 | 96-84 |
| 3 | > 4 to 9 | 83-64 |
| 4 | > 9 to 16 | 63-36 |
| 5 | >16 | < 36 |

### c) Determination of the abrasion resistance ("ASTM Bayer test" or "Bayer sand"), haze value and Tv

Abrasion resistance was determined as disclosed in WO 2012/173596. Specifically, abrasion resistance was measured by means of the sand Bayer test, in accordance with the ASTM F735-81 standard (Standard Test Method for Abrasion Resistance of Transparent Plastics and Coatings Using Oscillating Sand Method). In brief, a coated surface of the article (i.e., lens) was subjected to abrasion in an oscillating abrasive box using sand (approximately 1000 g) for 1 cycle of 300 forward and back motions. An amount or degree of abrasion was measured and performance results, as a Bayer value, were expressed as a calculated ratio of a reference lens to the coated lens, in which the degree of abrasion is a change in haze as measured by a hazemeter lens (Bayer value = H_{standard} / Hₛₐₘₚₗₑ). A higher Bayer value indicates a higher abrasion resistance.

The haze value of the final optical article was measured by light transmission as disclosed in WO 2012/173596 utilizing the Haze-Guard Plus haze meter from BYK-Gardner (a color difference meter) according to the method of ASTM D1003-00. As haze is a measurement of the percentage of transmitted light scattered more than 2.5° from the axis of the incident light, the smaller the haze value, the lower the degree of cloudiness. Generally, for optical articles described herein, a haze value of less than or equal to 0.3 % is acceptable, more preferably of less than or equal to 0.2 %.

The light transmission factor in the visible spectrum Tv was measured in transmission mode from a wearer's view angle using the same device, with the back (concave) side of the lens (2 mm thickness at the center) facing the detector and light incoming on the front side of the lens. Tv was measured under D65 illumination conditions (daylight).

### d) Scratch-resistance: Hand Steel wool test (HSW)

The HSW test was implemented on the convex side of the lens only. Waiting time of 24 hours is respected to perform the test if an antireflection coating is deposited on the lens. The lens was manually abraded with a steel wool perpendicularly to fibers direction performing 5 back and forth (with an amplitude from 4 to 5 cm) keeping an index finger constant pressure on the steel wool. Strength pressed on the steel wool can be evaluated with a balance: fix the lens on the balance plate with adhesive tape and press down the lens with the index finger exercising normally strength on the lens. This strength is about 5 Kg during the first way and about 2.5 Kg during the return way. Lenses were visually inspected and noted according to the following table. The higher is the note, the more abraded is the lens.

| Number of scratches | > 50 | 11-50 | ≤ 10 |
|---|---|---|---|
| Note | 5 | 3 | 1 |
| Risk level | High | Acceptable | Low |

### e) Yi and thickness

The yellowness index Yi of the prepared lenses was calculated as described above, by measuring on a white background with the above spectrophotometer the CIE tristimulus values X, Y, Z such as described in the standard ASTM E 313-05, through reflection measures, with the front (convex) side of the lens facing the detector and light incoming on said front side. This way of measuring Yi, from an observer's view angle, is the closest to the actual wearing situation.

Thickness of the films was evaluated by ellipsometer (thickness < 1µm) equipped with M-44™, EC-270 and LPS-400 with 75W Xenon Light Source from J. A. Woollam Co. Inc. or with a Metricon Model 2010 Prism Coupler apparatus (thickness > 1µm) from Metricon Corporation.

### 2. Experimental details

### a) General considerations

Hard coating compositions were prepared by first mixing Glymo and 0.1 N HCl for 1 hour at room temperature (18-21°C), and then, adding a composition comprising a catalyst (aluminum acetylacetonate), a fluorinated surfactant (Unidyne™ NS-9013 from Daikin Industries), an SiO₂ nanoparticle aqueous dispersion (MA-ST-HV^{®} from Nissan Chemical, 30 % wt. dispersion in methanol), half of the methanol and half of the methyl ethyl ketone, then adding half of the methanol and finally adding an ether additive (see table 1 hereunder) dissolved in half of the methyl ethyl ketone. In comparative example 7, no ether additive was added to the composition.

**Table 1**

| Example | Ether additive |
|---|---|
| 1-3 (invention) | 1,4-butanediol diglycidyl ether |
| C1, C4 (comparative) | Trimethylol propane diglycidyl ether |
| C2, C5 (comparative) | PEG 380 |
| C3, C6 (comparative) | PEG 640 |
| C7 (comparative) | --- |

| Ether additive | 1,4-butanediol diglycidyl ether | Trimethylolpropane triglycidyl ether | Polyethylene glycol 380 (PEG 380) Mw ∼ 380 g/mol | Polyethylene glycol 640 (PEG 640) Mw ∼ 640 g/mol |
|---|---|---|---|---|
| Formula | 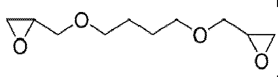 | 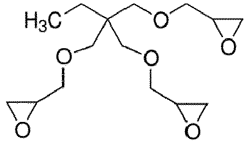 | 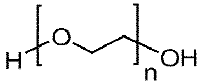 | |

### b) Preparation of coated optical articles

The optical articles used in the examples were round lenses (plano or -2.00 with a diameter of 68 mm) comprising an ORMA^{®} substrate (obtained by polymerizing CR-39^{®} diethylene glycol bis(allyl carbonate) monomer) or an MR7^{®} substrate from Mitsui Toatsu Chemicals.

The convex surface of the substrate was first corona treated and then optionally spin-coated at 500/1000 rpm with a primer composition (UG9, 1 µm thickness) and with a hard coat composition as detailed in the next paragraph (2.6 µm thickness). The curable hard coating composition provides, upon curing, a functional transparent coating having abrasion and/or scratch resistance (precuring: 15 minutes at 75°C; curing: 3 hours at 100°C).

UG9 is an aqueous dispersion (dry extract weight: 17 %) comprising a polyurethane latex (U5200 from Alberdingk Boley, 85 % of the dry extract weight of the composition) and colloidal silica (Si 30 from JGC corporation, 15 % of the dry extract weight of the composition).

### c) Details of the hard coating formulations

The hard coating formulations used in the examples are described in Table 2, as well as the performance test data of the prepared optical articles.

The figures in the table are weight percentages of the components relative to the total weight of the composition.

450 g of each coating composition was prepared based on the weight percentages indicated in table 2. The dry extract weight of the composition was around 31 %, relative to the total weight of the composition. The dry extract of colloidal silica (compound (c) according to the invention) was 32.4 % by weight, relative to the dry extract weight of the composition.

In examples 1-3, the amount of 1,4-butanediol diglycidyl ether (compound (b) according to the invention) was varied from 0.3 wt% to 3 wt% and the amount of glymo (compound (a) according to the invention) was varied from 25.32 wt% to 27.13 wt%.

In examples 1 and C1-C3, 1,4-butanediol diglycidyl ether, trimethylol propane diglycidyl ether, PEG 380 and PEG 640 were present in an amount of 9.6 %, relative to the dry extract weight of the composition. The dry extract weight of glymo was 53 %.

In examples 2 and C4-C6, 1,4-butanediol diglycidyl ether, trimethylol propane diglycidyl ether, PEG 380 and PEG 640 were present in an amount of 4.8 %, relative to the dry extract weight of the composition. The dry extract weight of glymo was 57.8 %.

In examples 3 and C7, 1,4-butanediol diglycidyl ether was present in amounts respectively equal to 2.88 % and 0 %, relative to the dry extract weight of the composition. The dry extract weights of glymo were respectively 59.71 % and 62.60 %.

All tests were performed on an Orma^{®} substrate directly coated with an inventive or comparative composition, except the text determining the % of initiated cracks. The latter test was performed on a MR7^{®} substrate coated with a primer and an inventive or comparative hard coat composition.

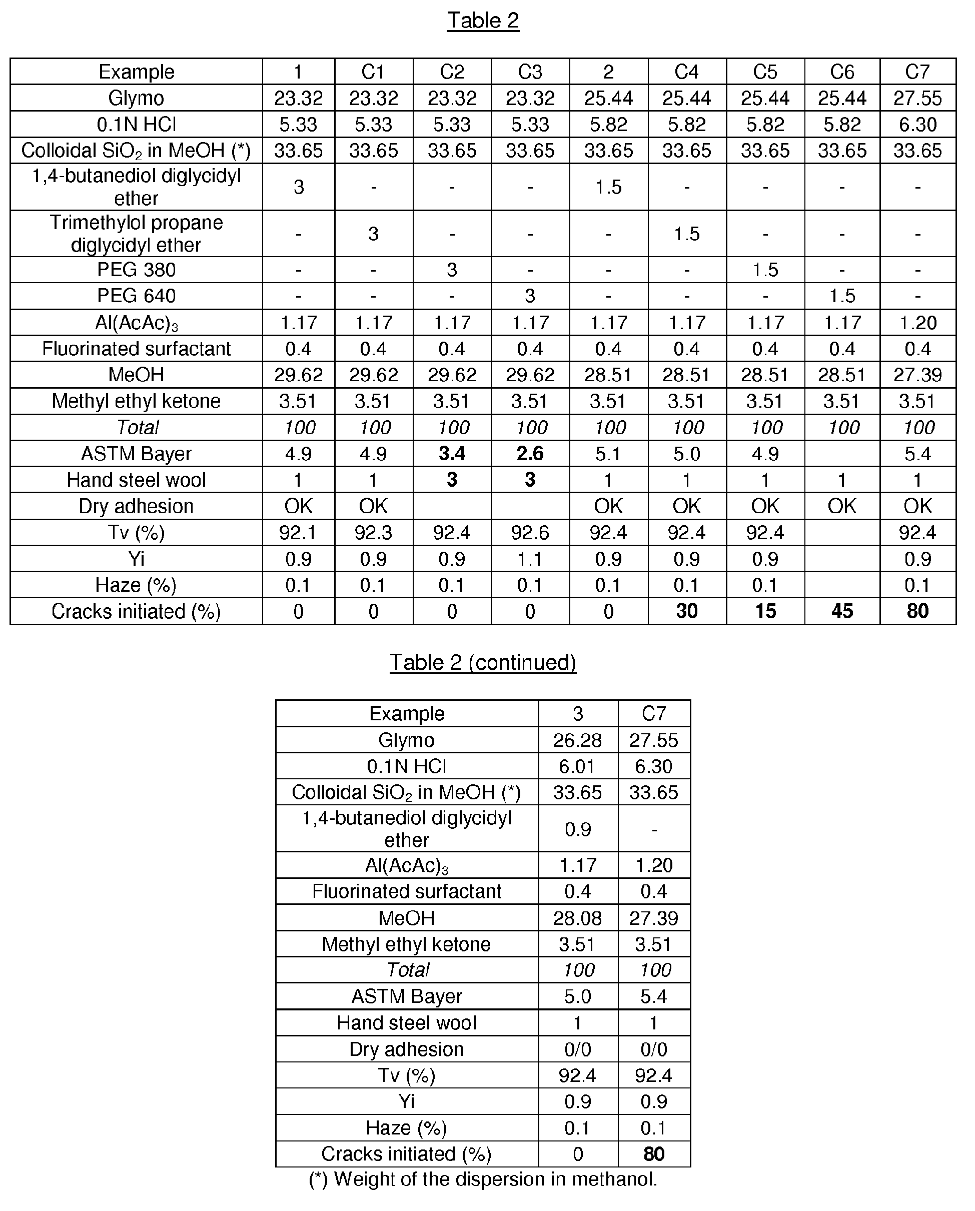

As can be seen from examples 1, 2 and comparative examples C2-C6, a compound (b) according to the invention is the most efficient ether additive. PEG 380 and PEG 640 tend to decrease the abrasion and scratch resistance of the optical article and/or increase the occurrence of cracks. As compared to comparative example C7, the use of an ether additive significantly decreases the rate of initiated cracks.

The best performance in terms of crack limitation are obtained when compound (b) is used in an amount higher than or equal to 0.75 %, preferably higher than or equal to 0.9 % by weight, relative to the weight of the composition. The optimum range in order to avoid diffusion of light is 0.75-2 %, preferably 0.9-1.5 % by weight for compound (b), relative to the weight of the composition.

The hard coating remains highly transparent in the visible range after modification with compound (b) (transmittance: > 92 %, haze ≤ 0.1 %), while the other performances are maintained (adhesion, abrasion resistance, scratch resistance, yellow index...).

As a conclusion, optical articles having a primer coating can be further coated with the inventive hard coating without generating cracks, so as to exhibit at the same time excellent abrasion resistance (ASTM Bayer around 5), scratch resistance, high optical transparency with about 92% of transmittance, low haze and low yellow index, while maintaining excellent adhesion to the underlying coating (crosshatch test 0).

## Claims

1. Optical article comprising a substrate having at least one main surface successively coated with an impact-resistant primer coating and an abrasion- and/or scratch-resistant coating, wherein the abrasion- and/or scratch-resistant coating is formed from a composition comprising:
(a) at least one epoxy compound bearing at least one silicon atom having at least one hydrolyzable group directly linked to the silicon atom and at least one group comprising an epoxy function linked to the silicon atom through a carbon atom, and/or a hydrolysate thereof,
(b) at least one alkylene glycol diglycidyl ether or poly(alkylene glycol) diglycidyl ether,
(c) colloidal particles of at least one metal oxide or metalloid oxide,
(d) at least one catalyst,
and wherein said composition does not comprise Si(X')₄ compounds, or hydrolysates thereof, in which the X' groups independently represent C1-C6 alkoxy groups.

2. An optical article according to any one of the preceding claims, wherein compound (a) is a compound of formula:
R_{n'}YₘSi(X)_{4-n'-m} (I)
in which the R groups are identical or different and represent monovalent organic groups linked to the silicon atom through a carbon atom, the Y groups are identical or different and represent monovalent organic groups linked to the silicon atom through a carbon atom and contain at least one epoxy function, the X groups are identical or different and represent hydrolyzable groups or hydrogen atoms, and m and n' are integers such that m is equal to 1 or 2 and n' + m = 1 or 2.

3. An optical article according to claim 2, wherein the Y groups are chosen from the groups of formulae IV and V: 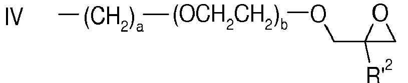 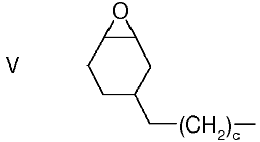 in which R'² is an alkyl group, preferably a methyl group, or a hydrogen atom, ideally a hydrogen atom, a and c are integers independently ranging from 1 to 6, and b is 0, 1 or 2.

4. An optical article according to claim 2, wherein compound (a) is chosen from epoxytrialkoxysilanes of formulae VI or VII: 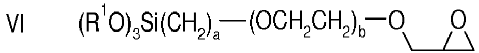 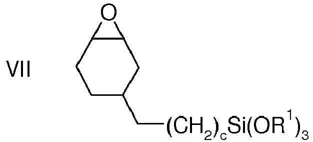 in which R¹ is an alkyl group having 1 to 6 carbon atoms, a and c are integers independently ranging from 1 to 6, and b is 0, 1 or 2, preferably γ-glycidoxypropyltrimethoxysilane.

5. An optical article according to any one of the preceding claims, wherein compound (b) is an alkylene glycol diglycidyl ether having an alkylene group comprising from 2 to 10 carbon atoms.

6. An optical article according to any one of the preceding claims, wherein compound (b) is selected from ethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, diethylene glycol diglycidyl ether, triethylene glycol diglycidyl ether, tetraethylene glycol diglycidyl ether, nonaethylene glycol diglycidyl ether, 1,4-butanediol diglycidyl ether, 1,3-butanediol diglycidyl ether, 2,3-butanediol diglycidyl ether, 1,5-pentanediol diglycidyl ether, 2,4-pentanediol diglycidyl ether, 1,6-hexanediol diglycidyl ether, 2,5-hexanediol diglycidyl ether, 2-methyl-2,4-pentanediol diglycidyl ether, neopentyl glycol diglycidyl ether, cyclohexanedimethanol diglycidyl ether, 2,2-bis(4-hydroxycyclohexyl)propane diglycidyl ether, polypropylene glycol diglycidyl ether, and polyethylene glycol diglycidyl ether, preferably 1,4-butanediol diglycidyl ether.

7. An optical article according to any one of the preceding claims, wherein compounds (c) are selected from colloidal particles of SiO₂, Al₂O₃ and TiO₂, preferably SiO₂.

8. An optical article according to any one of the preceding claims, wherein compounds (d) are selected from aluminum chelates, aluminum alkoxides, aluminum acylates and siloxy aluminum compounds.

9. An optical article according to any one of the preceding claims, wherein compounds (a) are present in an amount ranging from 40 to 80 %, relative to the dry extract weight of the composition.

10. An optical article according to any one of the preceding claims, wherein compounds (b) are present in an amount ranging from 0.75 to 15 %, relative to the dry extract weight of the composition.

11. An optical article according to any one of the preceding claims, wherein compounds (b) are present in an amount ranging from 0.3 to 5 %, relative to the total weight of the composition.

12. An optical article according to any one of the preceding claims, wherein compounds (c) are present in an amount ranging from 20 to 50 %, relative to the dry extract weight of the composition.

13. An optical article according to any one of the preceding claims, further defined as being an optical lens, preferably an ophthalmic lens.

14. An optical article according to any one of the preceding claims, wherein the impact-resistant primer comprises colloidal fillers.

15. An optical article according to any one of the preceding claims, wherein the abrasion-and/or scratch-resistant coating has a thickness ranging from 1 to 10 µm.
